# EUROPEAN PATENT APPLICATION

(11) **EP 3 424 336 A1**
(43) Date of publication of application: **09.01.2019**
(21) Application number: 17179586.7
(22) Date of filing: 04.07.2017
(51) Int. Cl.: A23B 4/10, A23B 4/06, A23L 13/00, A23L 17/00

(54) **METHODS FOR PRODUCING FROZEN PIECES OF COATED MEAT**

(71) Applicant: Cargill, Incorporated, Wayzata, MN 55391 (US)
(72) Inventor: The designation of the inventor has not yet been filed
(74) Representative: Morariu Radu, Mihai Dorin

(57) **Abstract**

Methods for producing frozen pieces of coated meat, which method includes sequentially:
cutting meat into two or more pieces, each piece of meat having a desired weight, or obtaining two or more pieces of meat having a desired weight;
passing each piece of meat through a coating applicator and contemporaneously coating each piece of meat therein with a substantially dry particulate to produce pieces of coated meat;
collecting each piece of coated meat from the coating applicator using a conveyor system and conveying each piece of coated meat using the conveyor system to a freezer; and
freezing each piece of coated meat in the freezer to produce frozen pieces of coated meat.

## Description

This invention relates to methods for producing frozen pieces of coated meat. More particularly, but not exclusively, this invention relates to industrial scale methods in which raw pieces of meat are passed through a drum breader and contemporaneously coated therein with a substantially dry particulate before freezing each piece of coated meat in a freezer.

It is known in the art to obtain raw meat pieces that have been cut to a desired weight. These meat pieces are subjected to a liquid marinade before being frozen. The marinating step typically involves loading the meat pieces and the liquid marinade into a meat tumbler and mixing the two for a period of time until sufficient marinade has been absorbed by the meat. Once sufficient marinade has been absorbed the meat pieces are manually loaded onto a conveyor which conveys the marinated meat pieces to a freezer inside which they are frozen. Manually loading the meat pieces in this way is the norm in the industry since it is important that the individual meat pieces are spaced from one another as they enter the freezer so that the pieces freeze evenly and do not become conjoined.

A problem with this known process is that it is labour intensive. For instance, at least ten individuals are required per manufacturing line to manually load the marinated meat pieces onto the conveyor in order to obtain a yield in the region of 800 kg to 1000 kg of frozen meat pieces per manufacturing line per hour.

There is a need, therefore, to provide an improved manufacturing method.

An object of the invention is to provide methods for producing frozen pieces of meat which are less labour intensive than known methods.

A further object of the invention is to increase the maximum yield of frozen meat pieces per manufacturing line.

In one aspect of the invention, we provide a method for producing frozen pieces of coated meat, which method comprises sequentially:
cutting meat into two or more pieces, each piece of meat having a desired weight, or obtaining two or more pieces of meat having a desired weight;
passing each piece of meat through a coating applicator and contemporaneously coating each piece of meat therein with a substantially dry particulate to produce pieces of coated meat;
collecting each piece of coated meat from the coating applicator using a conveyor system and conveying each piece of coated meat using the conveyor system to a freezer; and
freezing each piece of coated meat in the freezer to produce frozen pieces of coated meat.

The meat may be animal meat, such as poultry, pork, lamb or beef. The meat may be fish, such as cod, haddock, pollock, ling, hake, salmon or halibut.

The desired weight of each piece of meat prior to being coated with the substantially dry particulate may be less than or equal to approximately 100 g, for example from approximately 70 g to approximately 100 g. In certain embodiments the desired weight of each piece of meat may be approximately 75 g.

Further features of the invention are set out in the claims appended hereto.

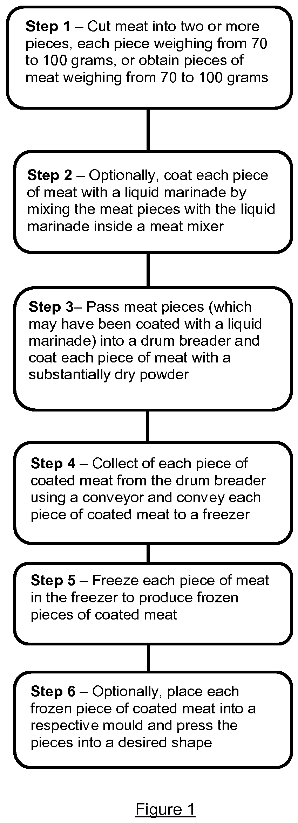

Embodiments of the various aspects of the invention will now be described by way of example only and with reference to figure 1, a flowchart which describes various industrial scale methods for producing frozen pieces of coated meat in accordance with the invention.

At step 1 pieces of meat having a desired weight are either cut from a larger source of meat, such as a carcass or a part thereof, or obtained pre-cut and already having the desired weight. For instance, the pre-cut pieces of meat may be obtained from a supplier. In some embodiments, the desired weight of each piece of meat may be from 70 g to 100 g, although it is to be appreciated that in other embodiments the desired weight of each piece of meat may be heavier or lighter than that without departing from the scope of the invention.

In some embodiments, the pieces of meat may be cut using a template slicing machine (TSM), such as the TSM Profiler supplied by Marel, although it is to be appreciated that other known methods of cutting meat may be used.

Some embodiments may include the optional step (step 2) of coating each piece of meat with a liquid. The liquid may include any one of more of a dairy product, oil, water, a seasoning, a flavouring or a flavour enhancer.

In some embodiments, the step of coating each piece of meat with the liquid may include placing each piece of meat inside a container and mixing each piece of meat with the liquid inside the container. The container may include an agitator for mixing the pieces of meat and the liquid. Alternatively or additionally, the container or a part thereof may be movable (such as rotatable) so as to mix the pieces of meat and liquid contained therein. Such containers are known in the art as meat mixers.

At step 3 the meat pieces (which may or may not have been coated with a liquid at step 2) are passed through a coating applicator and contemporaneously coated therein with a substantially dry particulate to produce pieces of coated meat. The substantially dry particulate may include any one of flour, breadcrumb, a seasoning, a flavouring, a flavour enhancer or any combination thereof.

The pieces of meat may enter the coating applicator via a hopper, although in some embodiments the pieces of meat may pass into the coating applicator directly from a conveyor system, such as from a conveyor belt of the conveyor system. For reasons that will become apparent below, it is not too critical that the pieces of meat are passed into the coating applicator in a particular manner but what is important is how the pieces of coated meat are collected from the coating applicator.

The coating applicator may include a rotating body (for instance a rotating drum) through which the pieces of meat pass and are coated with the dry particulate. Such applicators are known in the art as drum breaders and need not be described in detail herein. In some embodiments, the coating applicator may be a GEA MultiDrum supplied by GEA, although it is to be appreciated that other coating applicators known in the art may be used.

At step 4 each piece of coated meat is collected from the coating applicator using a conveyor system (which may be the same or differ from a conveyor system used to supply the pieces of meat to the coating applicator). In some embodiments, the conveyor system used to collect the pieces of meat from the coating applicator may include a conveyor belt upon which each piece of coated meat is allowed to fall under gravity from the coating applicator.

In step 5, each piece of coated meat is conveyed to a freezer, for example using the conveyor belt, and the pieces of coated meat are then frozen in the freezer to produce frozen pieces of coated meat. In some embodiments, the step of freezing each piece of coated meat may include conveying each piece of coated meat through a tunnel freezer. In some embodiments, each piece of meat may be cryogenically frozen (for instance using liquid N₂) in the freezer or the tunnel freezer.

Some embodiments may include the optional step (step 6) of placing each frozen piece of coated meat into a respective mould and pressing the frozen pieces of meat into a desired shape. In some embodiments, the mould may be a food shaper supplied by Nienstedt GmbH, although it is to be appreciated that other food shapers known in the art may be used.

Once frozen and shaped the pieces of meat may be cooked immediately. Alternatively, the pieces of meat may be stored for cooking at a later date. In some embodiments, the frozen pieces of meat may be stored in a temperature controlled storage container, for example a container that can be transported to a cooking site (such as a restaurant).

The steps of coating each piece of meat with a substantially dry particulate in a coating applicator and collecting each piece of coated meat from the coating applicator using a conveyor system are advantageous for a number of reasons. First, these steps provide for a less labour intensive method for producing frozen pieces of meat when compared to known methods. The method of the invention removes the need for having to manually load the pieces of coated meat onto the conveyor system, thereby reducing the cost of manual labour. Second, these steps result in an improved product due to the fact that the pieces of meat are coated with a substantially dry particulate prior to being frozen. This has the significant effect of reducing the quantity of conjoined pieces post freezing. It also improves the quality of the product since the meat pieces are more evenly frozen since they are kept apart from one another. Third, it is envisaged that the method of the invention will result in a maximum yield of frozen meat pieces in the region of 1,500 kg per manufacturing line per hour.

All weights as specified herein are subject to a variation of +/- 2 % to allow for tolerances in manufacturing process.

When used herein the terms "meat pieces" or "pieces of meat" primarily refer to pieces of whole muscle, although it is to be appreciated that the method could equally be applied to pieces of reconstituted meat or pieces of meat mix, i.e. meat pieces that contain mixtures of different pieces of whole muscle (which could be from the same or different types of animal).

When used herein the term "substantially dry particulate" is intended to refer to a particulate which has the effect of preventing the meat pieces from sticking to one another, for example as they are collected from the coating applicator by the conveyor system. It is to be appreciated that particulates containing some degree of moisture (such as up to approximately 10 wt% moisture) will have the effect of preventing sticking and therefore such particulates are intended to fall within the scope of this definition.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method for producing frozen pieces of coated meat, which method comprises sequentially:
cutting meat into two or more pieces, each piece of meat having a desired weight, or obtaining two or more pieces of meat having a desired weight;
passing each piece of meat through a coating applicator and contemporaneously coating each piece of meat therein with a substantially dry particulate to produce pieces of coated meat;
collecting each piece of coated meat from the coating applicator using a conveyor system and conveying each piece of coated meat using the conveyor system to a freezer; and
freezing each piece of coated meat in the freezer to produce frozen pieces of coated meat.

2. The method according to claim 1 wherein the step of collecting each piece of coated meat from the coating applicator using a conveyor system comprises allowing each piece of coated meat to fall under gravity from the coating applicator and onto a conveyor belt of the conveyor system.

3. The method according to claim 1 or claim 2 wherein the step of passing each piece of meat through the coating applicator includes passing each piece of meat through a rotating body and contemporaneously coating each piece of meat therein with the substantially dry particulate.

4. The method according to any preceding claim wherein the step of freezing each piece of coated meat comprises conveying each piece of coated meat through a tunnel freezer.

5. The method according to any preceding claim wherein each piece of meat is cryogenically frozen in the freezer or the tunnel freezer.

6. The method according to any preceding claim including the step of placing each frozen piece of coated meat into a respective mould and pressing the pieces into a desired shape.

7. The method according to any preceding claim including the step of coating each piece of meat with a liquid prior to coating each piece of meat with the substantially dry particulate.

8. The method according to claim 7 wherein the step of coating each piece of meat with a liquid includes placing each piece of meat inside a container and contemporaneously coating each piece of meat with the liquid inside the container.

9. The method according to any preceding claim including the step of storing the frozen pieces of coated meat in a temperature controlled storage container.

10. A frozen piece of coated meat formed according to the method of any preceding claim.

11. The frozen piece of coated meat according to claim 10, wherein the substantially dry particulate includes any one of flour, breadcrumb, a seasoning, a flavouring, a flavour enhancer or any combination thereof.

12. The frozen piece of coated meat according to claim 10 or claim 11, wherein the or a liquid includes any one of a dairy product, oil, water, a seasoning, a flavouring, a flavour enhancer or any combination thereof.

13. A method for producing frozen pieces of coated meat or a frozen piece of coated meat, substantially as hereinbefore described and/or shown in the accompanying drawing.

14. Any novel feature or novel combination of features described herein and/or shown in the accompanying drawing.
